# EUROPÄISCHE PATENTSCHRIFT

(11) **EP 1 233 158 B1**
(45) Veröffentlichungstag und Bekanntmachung des Hinweises auf die Patenterteilung: **06.10.2004**
(21) Anmeldenummer: 01130526.5
(22) Anmeldetag: 22.05.2000
(51) Int. Cl.: F01P 11/02, F01P 3/22, F03G 7/00

(54) **Verschlussdeckel für Kraftfahrzeugkühler**
Closure cap for a motor vehicle radiator
Bouchon pour radiateur de véhicule automobile

(30) Priorität: 22.05.1999 DE 19923775
(43) Veröffentlichungstag der Anmeldung: 21.08.2002
(62) Teilanmeldung aus: 00943729.4
(73) Patentinhaber: REUTTER, Heinrich, 71336 Waiblingen-Hohenacker (DE)
(72) Erfinder: Reutter, Heinrich, 71336 Waiblingen (DE)
(74) Vertreter: Fuhlendorf, Jörn, Dipl.-Ing.

(56) Entgegenhaltungen:
- EP-A- 0 287 450
- EP-A- 0 544 985
- DE-A- 19 705 036
- DE-A- 19 753 597
- US-A- 4 385 494

## Beschreibung

Die vorliegende Erfindung bezieht sich auf einen Verschlußdeckel für einen ortsfesten Stutzen eines Behälters, insbesondere Kraftfahrzeugkühlers, nach dem Oberbegriff des Anspruchs 1.

Bei bekannten Verschlußdeckeln für beispielsweise Kraftfahrzeugkühler ist der Ventilkörper der Ventilanordnung in konstanter Weise derart beaufschlagt, daß die Strömungsverbindung zwischen dem Kühlerinneren und dem Kühleräußeren dann geöffnet wird, wenn ein bestimmter Grenzwert des Kühlerinnendrucks überschritten wird. Dies führt dann zu einem Ablassen von mit Kühlwasser durchsetzter Luft. Solche einfachen Verschlußdeckel sorgen während des Betriebs des Kraftfahrzeugs für einen Druckausgleich dann, wenn der Druck durch die Erwärmung des Kühlwassers in dem Kühler ansteigt und ein kritischer Druckwert erreicht oder überschritten wird. Dies ist ein Sicherheitsaspekt. Bei Kraftfahrzeugkühlern steigt jedoch dann, wenn das Fahrzeug abgestellt wird, das heißt, der Motor abgeschaltet wird, der Überdruck durch Stauwärme ebenfalls an, so daß bei den genannten einfachen Verschlußdeckeln ebenfalls ein vollständiges Öffnen stattfindet und die Gefahr besteht, daß eine große Menge Kühlwasser austritt beziehungsweise verdunstet oder der Kühler gar leerkocht und damit häufig Kühlwasser nachgefüllt werden muß. Zu diesem Zweck wurden mehrstufige Verschlußdeckel entwickelt (DE 4107 525 C 1), die den durch Stauwärme erzeugten Überdruck anders abbauen als einen durch Fehlfunktionen auftretenden, wesentlich höheren Überdruck. Ein derartiger Verschlußdeckel ist jedoch aufgrund mehrerer gegeneinander bewegbarer Ventilkörperteile und mehrerer Dicht- und Gegendichtflächen relativ aufwendig. Außerdem wird auch bei einem durch Stauwärme nach Abschalten des Fahrzeugmotors erreichten Überdrucks Kühlwasser durch das Druckablassen versprüht. Ein absoluter Wasserverlust kann in diesem Falle nur vermieden werden, wenn ein Ausgleichsbehälter zum Auffangen der Flüssigkeit eingebaut oder eine zusätzliche Umwälzpumpe, welche beim Abstellen des Motors einen Druckanstieg durch Umwälzen des Kühlmittels verhindert, verwendet wird. Dies ist jedoch kostenaufwendig.

Bei einem aus der EP-A-0 287 450 bekannten Verschlussdeckel der eingangs genannten Art ist der Antrieb durch ein elektrisch beheizbares Dehnstoffelement in Form eines Wachs enthaltenden Aktuators gebildet.

Aufgabe der vorliegenden Erfindung ist es deshalb, einen Verschlußdeckel der eingangs genannten Art zu schaffen, mit dem einerseits ein Öffnen bei einem durch Stauwärme erzeugten Überdruck in einfacher und kostengünstiger Weise verhindert ist und mit dem andererseits nach wie vor sichergestellt ist, daß der Behälter bei weiterem Ansteigen des Drucks geschützt ist.

Zur Lösung dieser Aufgabe sind bei einem Verschlußdeckel der eingangs genannten Art die im Anspruch 1 angegebenen Merkmale vorgesehen.

Durch die erfindungsgemäßen Maßnahmen ist erreicht, daß die Vorspannung auf den Ventilkörper in Abhängigkeit vom Betrieb des beispielsweise Kraftfahrzeugs derart gesteuert werden kann, daß der Verschlußdeckel bei einem durch Stauwärme erzeugten definiertem Überdruck nicht öffnet. Dadurch ist ein Ablassen von mit Kühlwasser vermischter Luft für diese "Betriebsphase" verhindert. Zusätzlicher Bauteile, wie Ausgleichsbehälter oder Umwälzpumpe bedarf es hierbei nicht. Der Überdruck kann durch Abkühlen des Kraftfahrzeugkühlers während des Stillstands erreicht werden. Dennoch wird der Verschlußdeckel bei einem weiteren Druckanstieg über eine bestimmte Sicherheitsgrenze hinaus öffnen, um das Kühlsystem durch Platzen, sich ergebende Undichtheiten, auch in den Verbindungsschläuchen, nicht zu gefährden. Beispielsweise kann die Vorspannung zweistufig, das heißt auf einen den Normalbetrieb entsprechenden Öffnungsdruck und auf einen den Druckanstieg bei Stauwärme berücksichtigenden höheren Öffnungsdruck eingestellt werden. Die Einstellung der Vorspannung für den Ventilkörper erfolgt über ein elektrisches Signal, das unmittelbar, beispielsweise aus dem Betriebszustand der Zündung hergeleitet und auf den Metallhydrid-Aktuator Geschaltet wird.

Ausgestaltungen hierzu ergeben sich durch die Merkmale nach den Ansprüchen 2 und/oder 3.

In weiterer Ausgestaltung ist der Verschlußdeckel gemäß den Merkmalen nach einem oder mehreren der Ansprüche 4 bis 7 mit einer temperaturabhängig gesteuerten Verdrehsicherung verbunden, die verhindert, daß im Betriebszustand bei zu hoher Temperatur der Verschlußdeckel vom Behälterstutzen abgeschraubt werden kann.

Vorteilhafte Ausgestaltungen bezüglich der mechanischen Vorspannung des Ventilkörpers ergeben sich durch die Merkmale des Anspruchs 8.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer, längsgeschnittener Darstellung (gemäß Linie I - I der Figur 2 A) einen Verschlußdeckel für Kraftfahrzeugkühler gemäß einem ersten Ausführungsbeispiel in einer ersten Stellung,
- Figur 2 A und 2 B: eine teilweise geschnittene Draufsicht gemäß Pfeil II A gemäß Figur 1 bzw. einen Schnitt längs der Linie II B - II B der Figur 1,
- Figuren 3 A und 3 B: in perspektivischer Ansicht bzw. teilweise geschnittener Seitenansicht einen Verschlußdeckel für Kraftfahrzeugkühler gemäß einem zweiten Ausführungsbeispiel,
- Figuren 4 und 5: in schematischer, längsgeschnittener Darstellung den Verschlußdeckel gemäß dem zweiten Ausführungsbeispiel in einer ersten bzw. in einer zweiten aktiven Stellung,
- Figuren 6 und 7: eine den Figuren 4 und 5 entsprechende Darstellung, jedoch eines Verschlußdeckels gemäß einem dritten Ausführungsbeispiel,
- Figuren 8 A und 8 B: einen Schnitt längs der Linie VIII A - VIII A der Figur 6 beziehungsweise einen Schnitt längs der Linie VIII B - VIII B der Figur 7 und
- Figur 9: in schematischer, längsgeschnittener Darstellung einen Verschlußdeckel für Kraftfahrzeugkühler gemäß einem bevorzugten Ausführungsbeispiel vorliegender Erfindung in einer ersten Stellung.

Der in der Zeichnung dargestellte Verschlußdeckel 10, 110, 210 bzw. 310 weist eine Überdruckventilanordnung 11 auf und ist in der Weise angesteuert, daß der Öffnungsdruck der Überdruckventilanordnung 11 mittels eines Antriebs 15, 115, 215 bzw. 315 zweistufig eingestellt werden kann, nämlich auf einen den Kraftfahrzeugkühlerüberdruck bei Normalbetrieb berücksichtigenden Öffnungsdruck und auf einen solchen Öffnungsdruck, der den höheren Kraftfahrzeugkühlerüberdruck, der sich beim Abstellen des Kraftfahrzeugmotors aufgrund der sich entwickelnden Stauwärme ergibt, entspricht.

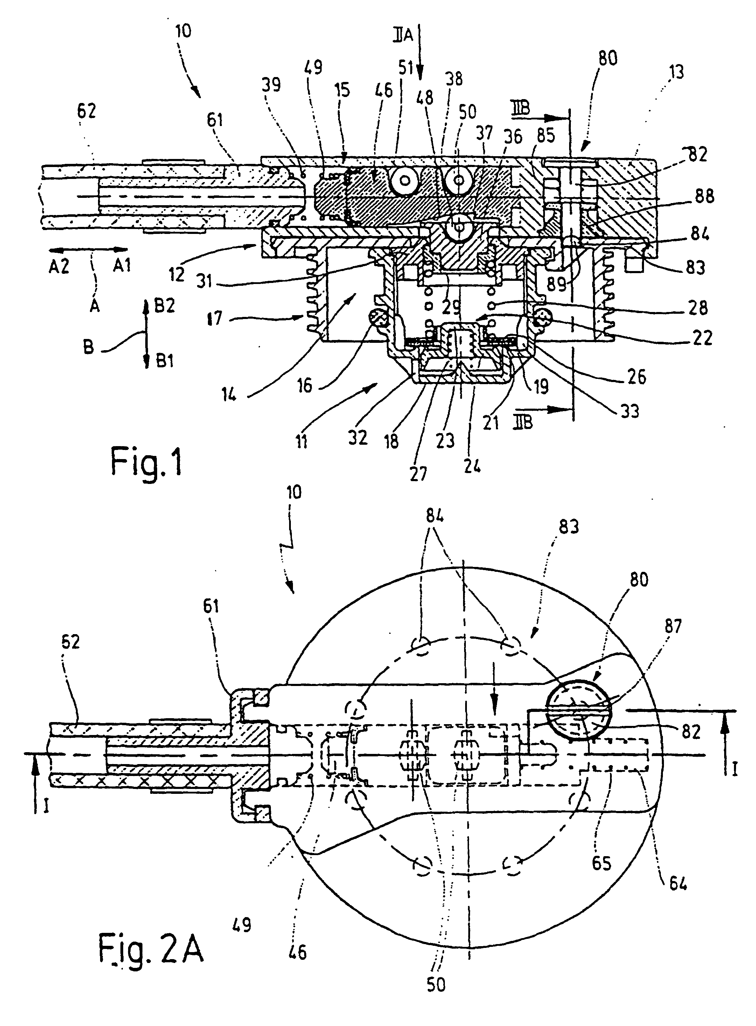

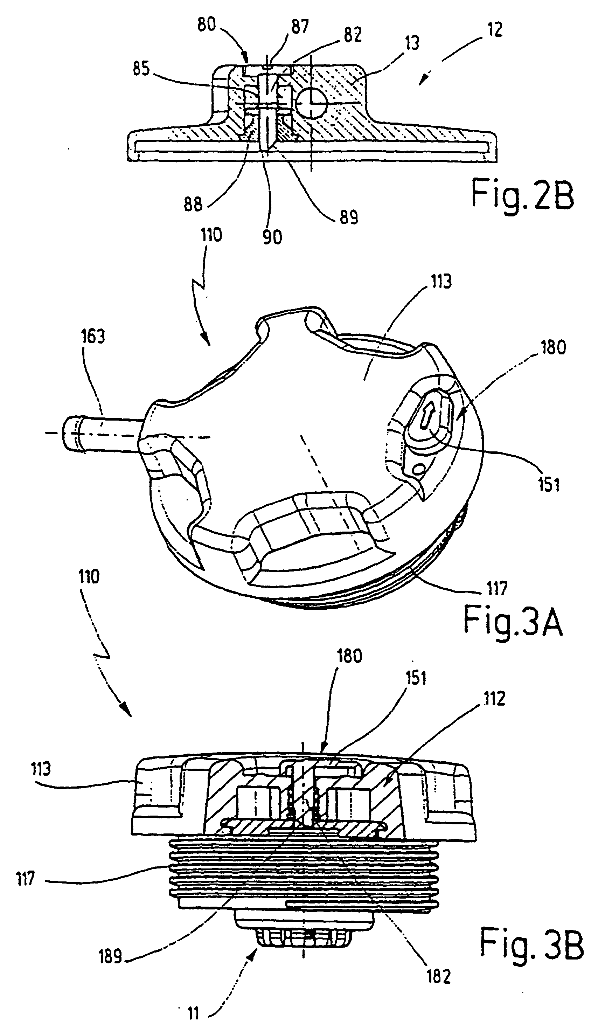

Gemäß den Figuren 1 und 2 A, 2 B besitzt der Verschlußdeckel 10 einen Außenteil 12 mit einer Handhabe 13 und einem Außengewindeteil 17 zum Auf- und Abschrauben des Verschlußdeckels 10 von der Öffnung eines Stutzens eines nicht dargestellten Kraftfahrzeugkühlers oder sonstigen Behälters und einen Innenteil 14, der über einen O-Ring 16 dichtend in den Stutzen des Kraftfahrzeugkühlers oder eines sonstigen Behälters einsetzbar und am Außenteil 12 gehalten ist. Die Handhabe 13 ist mit dem Außengewindeteil 17 entweder starr oder verriegelbar verdrehbar verbunden, wobei eine druck-, vorzugsweise jedoch eine temperaturabhängig arbeitende Verdrehsicherung vorgesehen sein kann. Es versteht sich, daß der Außenteil 12 statt mit einem Außengewindeteil 17 auch mit einem Bajonettverschlußteil versehen sein kann.

Der zylindrisch ausgebildete Innenteil 14 des Verschlußdeckels 10 ist mit der Überdruckventilanordnung 11 bestückt. Er besitzt einen Boden 18 und oberhalb des Bodens einen nach innen ragenden Ringrand 19, dessen oberer Bereich mit einem Dichtsitz 21 für einen Ventilkörper 22 der Überdruckventilanordnung 11 versehen ist. Der Ventilkörper 22 besitzt ein mittiges, hutförmiges Teil 23, auf dessen Umfangsflansch 24 eine Dichtscheibe 26 aufliegt. Der hutförmige Teil 23 stützt sich über eine Federstütze 27 am Boden 18 ab. Die Dichtscheibe 26 ist von einer Druckfeder 28 bzw. Überdruckventilfeder beaufschlagt, die sich andernends an einer Hülse 29 abstützt, die in einem einen axialen Anschlag 34 für die Hülse 29 besitzenden Führungszylinder 31 axial auf- und abbewegbar geführt ist. Der Führungzylinder 31 ist am dem Ventilkörper 22 abgewandten Ende des Innenteils 14 befestigt. Bodenseitig sind in den Kraftfahrzeugkühler beziehungsweise Behälter weisende Öffnungen 32 vorgesehen. Außerdem besitzt der Innenteil 14 außenumfangsseitig und dem durchmesserkleineren Führungszylinder 31 gegenüberliegend Öffnungen 33, die mit der Außenatmosphäre in Verbindung stehen. Bei vom Dichtsitz 21 abgehobenen Ventilkörper 22 ergibt sich eine Strömungsverbindung zwischen dem Kühler - bzw. Behälterinneren und der Außenluft.

In der Hülse 29 ist ein Druckstück 36 bewegungsschlüssig aufgenommen, das andernends in eine Kammer 39 im Außenteil 12 ragt und eine Rollen- beziehungsweise Walzenaufnahme 37 besitzt. In dieser Aufnahme 37 des Druckstücks 36 ist eine Rolle beziehungsweise Walze 38 frei drehbar gelagert bzw. eingelegt. Die Walze 38 liegt zumindest teilweise innerhalb der hier horizontalen zylindrischen Kammer 39, die an ihrem offenen Ende mithilfe eines leicht abnehmbaren Kupplungsstücks 61, an dem ein beispielsweise zum Motor führender Schlauch 62 befestigt ist, druckdicht verschließbar ist. Innerhalb der Zylinderkammer 39 ist ein Kolben 46 in Richtung des Doppelpfeils A und damit senkrecht zur Bewegung des Druckstücks gemäß Doppelpfeil B hin- und herbewegbar geführt. Zwischen dem Kupplungsstück 61 und dem gegenüberliegenden Ende des Kolben 46 ist eine Schaltfeder 49 (Fig. 2 A) vorgesehen. Das dem Kupplungsstück 61 abgewandte Ende 63 des Kolbens 46 ist in einer Sacklochbohrung 64 am anderen Ende der Handhabe 13 geführt. Das durchmesserkleinere Ende des Kolbens 46 ist von einer Druckfeder 65 umgeben, die sich andernends am Grund der Sacklochbohrung 64 abstützt. Der Kolben 46 besitzt dem Druckstück 36 zugewandt eine Auflaufschräge 48, an der die Walze 38 des Druckstücks 36 anliegt. Der Anlaufschräge 48 gegenüberliegend ist der Kolben 46 mit zwei Ausnehmungen 51 versehen, in denen je eine Rolle oder Walze 50 frei drehbar eingelegt ist, welche Walzen 50 sich an der Innenwandung der Kammer 39 abrollend abstützen.

Die Wirkungsweise der Steuerung der Überdruckventilanordnung 11 des Verschlußdeckels 10 ist folgende: wird das Kupplungsstück 61 mit dem eine Unterdruckleitung zum Motorraum darstellenden Schlauch 62 in die Zylinderkammer 39 der Handhabe 13 des Verschlußdeckels 10 eingerastet, wird die Schaltfeder 49 mechanisch vorgespannt, so daß diese ausgehend von der Position der Figur 1 den Kolben 46 nach innen drückt. Dadurch wird über die Auflaufschräge 48 und die Walze 38 das Druckstück 36 in Richtung des Pfeiles B1 (nach unten) bewegt, so daß die Überdruckventilfeder 28 vorgespannt wird. Auf diese Weise erhält der Ventilkörper 22 einen erhöhten Öffnungsdruck.

Da beim Start des Kraftfahrzeugmotors Unterdruck entsteht, wird der in der Kammer 39 druckdicht geführte Kolben 46 in Richtung des Pfeiles A2 gezogen, wodurch der Kolben 46 sich in die Stellung gemäß Figur 1 zurückzieht. Dadurch wird unter der Wirkung der Druckfeder 28 das Druckstück 36 in Richtung des Pfeiles B2 (nach oben) bewegt, so daß sich die Druckfeder 28 etwas entspannt. Dadurch ergibt sich für den Ventilkörper 22 ein geringerer Öffnungsdruck, der üblicherweise etwa bei 1,4 bar eingestellt ist. Nach dem Abstellen des Kraftfahrzeugmotors liegt am Kolben 46 kein Unterdruck mehr an, so daß dann die Schaltfeder 49 den Kolben 46 wieder in Richtung des Pfeiles A1 entgegen der Wirkung der Feder 65 bewegen kann. Auf diese Weise ist die Überdruckventilfeder 28 wiederum gespannt, so daß sich ein auf beispielsweise 2,0 bar erhöhter Öffnungsdruck für den Ventilkörper 22 ergibt. Dadurch kann der Ventilkörper 22 einem durch die Stauwärme aufgrund des abgestellten Motors sich ergebenden höheren Kühler- beziehungsweise Behälterinnendruck standhalten.

Wird zum Öffnen des Verschlußdeckels 10, beispielsweise zum Nachfüllen von Kühlflüssigkeit das Kupplungsstück 61 abgekuppelt, entspannt sich die Schaltfeder 49 vollständig, so daß die Überdruckventilfeder 28 durch Eigenkraft in oben beschriebener Weise auf den Normalbetrieb-Öffnungsdruck von beispielsweise 1,4 bar umschaltet. Wird nach dem Wiederaufschrauben des Verschlußdeckels 10 vergessen, das Kupplungsstück 61 mit dem Verschlußdeckel 10 zu koppeln, bleibt automatisch der niedrigere Normalbetrieb-Öffnungsdruck erhalten, so daß das Kraftfahrzeug nach wie vor genutzt werden kann.

Eine ratschenartig arbeitende Verdrehvorrichtung bzw. Drehverbindungsvorrichtung 80 zwischen dem Außenteil 12 und dem das Außengewindeteil 17 aufweisenden Innenteil, mit dem die Überdruckventilanordnung 11 verbunden ist, besitzt ein Kopplungsteil in Form eines Kopplungsbolzens 82. Dem in der Handhabe 13 an einem Umfangsbereich angeordneten, axial bewegbaren Kopplungsbolzen 82 gegenüberliegend ist in einer oberen Wandung 83 des Außengewindeteils 17 ein Ring axialer Bohrungen 84 vorgesehen, in dessen jeweils eine Bohrung 84 zur drehschlüssigen Kopplung von Handhabe 13 und Außengewindeteil 17 das innere freie Ende 90 des Kopplungsbolzens 82 wahlweise eingreift. In dieser Position kann der Verschlußdeckel 10 vom Kühlerstutzen abgenommen werden. Der Kopplungsbolzen 82 ist an einer in die Bohrung 86 der Handhabe 13 gehaltenen Lagerhülse 88 auf- und abbewegbar geführt und an seinem bewegungsfesten Bund von einer Druckfeder 85 zum Bohrungskranz 83 hin beaufschlagt. Der Kopplungsbolzen 82, der an seinem in die Bohrung 84 eintauchenden Ende 90 an einem Umfangsbereich über etwa 180° eine Schrägfläche 89 besitzt, kann über einen Kopfschlitz 87 mit einem Schraubendreher gemäß Figur 2B nach links oder rechts um 180° gedreht werden. Auf diese Weise ist entsprechend der Stellung der Schrägfläche der Kopplungsbolzen 82 bei Rechts- oder Linksdrehung der Handhabe 13 mit der Bohrung 84 in Eingriff, während er sich in der jeweiligen Gegenrichtung nach Art einer Ratsche frei durchdrehen kann, was durch Rückfedern des Kopplungsbolzens 82 gegen die Wirkung der ihn beaufschlagenden Druckfeder 85 erreicht ist.

Bei dem in den Figuren 3A, 3B, 4 und 5 dargestellten Verschlußdeckel 11 ist das Druckstück 136 der Druckfeder 128 abgewandt von einer Stellfeder 154 beaufschlagt, die sich einenends am Druckstück 136 und andernends an der Innenwandung der Handhabe 113 zentrierend abstützt. Das Druckstück 136 ist mittig an einer Membran 155 axial beweglich gelagert, wobei der Umfangsrand der Membran 155 zwischen der Handhabe 113 und dem Außengewindeteil 117 eingespannt ist. Gegenüber dem Druckstück 36 besitzt dieses Druckstück 136 eine in Draufsicht gesehen größere Oberfläche und ragt wesentlich in die Kammer 139, die mit der Unterdruckleitung zum Motor verbunden ist.

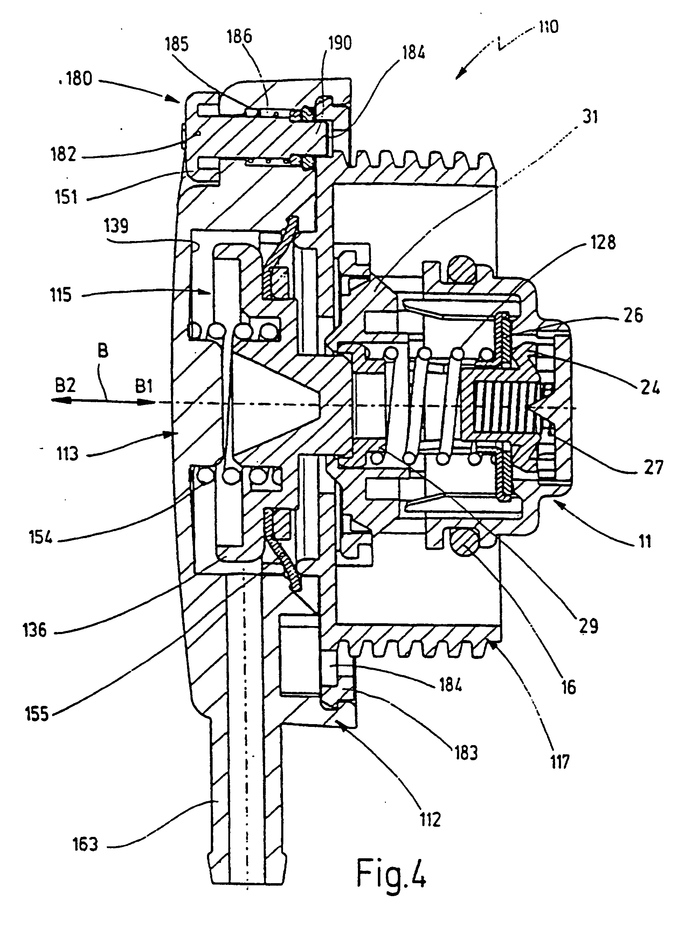

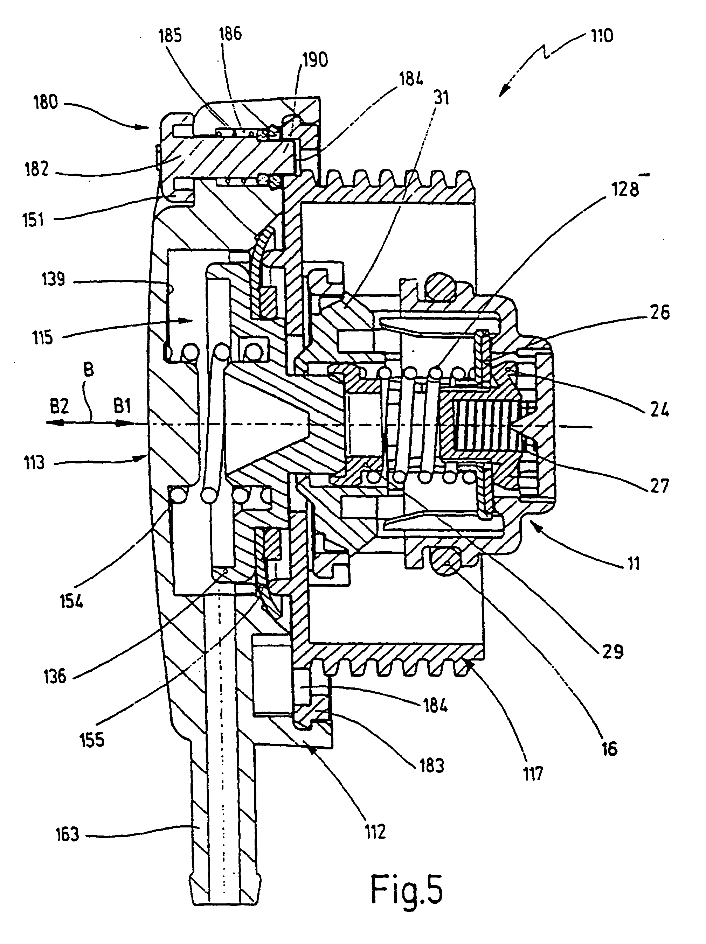

Auch hier spannt, wenn bei ausgeschaltetem Motor kein Unterdruck in der Kammer 139 und damit am Druckstück 136 anliegt, die Stellfeder 154, die eine größere Kraft als die Druckfeder 128 besitzt, die letztgenannte vor, so daß der Ventilkörper 122 einem Öffnungsdruck von etwa 2,0 bar standhält (Fig. 5). Sobald der Motor angelassen wird, stellt sich über die Unterdruckleitung ein Unterdruck in der Kammer 139 und damit auf das Druckstück 136 ein, was zur Folge hat, daß das Druckstück 136 in die Unterdruckkammer 139 bis zu einem gemäß Figur 4 dargestellten Anschlag eingesaugt wird. Dadurch wird die Stellfeder 154 gespannt und die Druckfeder 128 entspannt, so daß der Ventilkörper 122 nur noch einem Öffnungsdruck von etwa 1,4 bar standhält. Diese Stellung besteht solange, wie der Motor läuft und dadurch Unterdruck erzeugt. Bei Abschalten des Motors erfolgt die Rückstellung in die Position gemäß Figur 5. Die Membran 155 bewirkt dabei eine Abdichtung zwischen der Unterdruckkammer 139 und dem übrigen Verschlußdeckelraum bzw. dem Innern des Kühlerbehälters und außerdem eine elastische Bewegungsverbindung bzw. -anordnung des Druckstücks 136 innerhalb des Verschlußdeckels 110.

Bei dem in den Figuren 3 bis 5 dargestellten Verschlußdeckel 110 ist die Handhabe 113 mit einem festen Rohrstück 163 für einen Schlauch und nicht mit einem Kupplungsstück versehen. Somit verbleibt zum Auf- bzw. Abdrehen des Verschlußdeckels 110 auf den bzw. vom Kühlmittelbehälterstutzen eine Verbindung zwischen Handhabe 113 und dem hier nicht dargestellten Schlauch bestehen.

Um bei einer solchen festen Verbindung zwischen Verschlußdeckel und Schlauch ein Festdrehen bzw. Lösen des Verschlußdeckels 110 zu erreichen, ist die ratschenartige Drehverbindungsvorrichtung 180 zwischen Außenteil 112 und Außengewindeteil 117 vorgesehen. Diese Ratschenverbindung 180 besitzt einen Kupplungsbolzen 182, der federbeaufschlagt in eine von vielen ringförmig angeordneten Bohrungen 184 in einem Umfangsrand 183 des Außengewindeteils 117 dringt. Der Kupplungsbolzen 182 liegt innerhalb einer axialen mit einer Hinterschneidung versehenen Bohrung 186, wobei innerhalb der Hinterschneidung die Druckfeder 185 vorgesehen ist. Der Bolzen 182 ist außenendseitig einem Hebel 151 (Fig. 3A) drehfest verbunden, mittels dem der Kupplungsbolzen 182 um 180° hin- und herdrehbar ist. Das innere Ende 190 des Kupplungsbolzens 182 ist mit einer Schrägfläche 189 versehen, die entsprechend der Stellung des Hebels 191 gemäß Figur 3 B nach links oder rechts zeigend angeordnet ist.

Auf diese Weise ist auch der Verschlußdeckel 110 (wie der Verschlußdeckel 10) durch Hin- und Herdrehen je nach Stellung des Hebels 191 auf den Behälterstutzen aufschraubbar oder von diesem abschraubbar. Mit anderen Worten, entsprechend der Stellung des Hebels 191 und damit der Stellung der Schrägfläche 189 ist in die eine Richtung eine drehfeste Verbindung zwischen Handhabe 113 und Außengewindeteil 117 vorhanden, während in der anderen Richtung eine freilaufende Ratschenwirkung dadurch erreicht ist, daß durch die Schrägfläche 189 und die Druckfeder 185 der Kopplungsbolzen 182 entgegen der Wirkung der Druckfeder aus der Bohrung 184 gelangen kann.

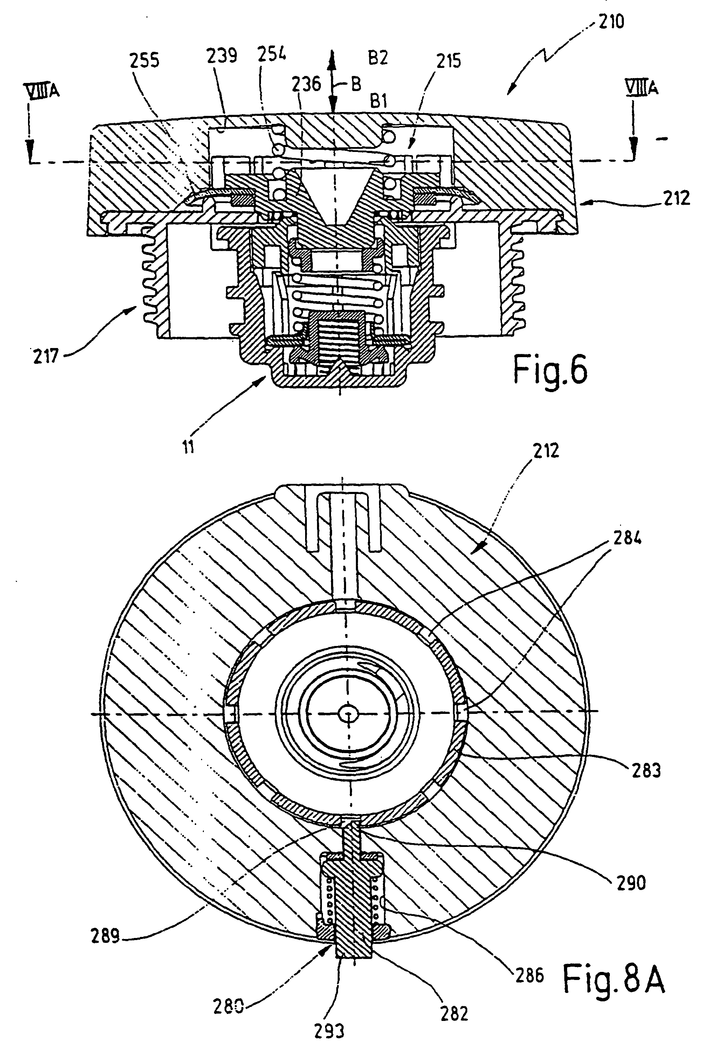

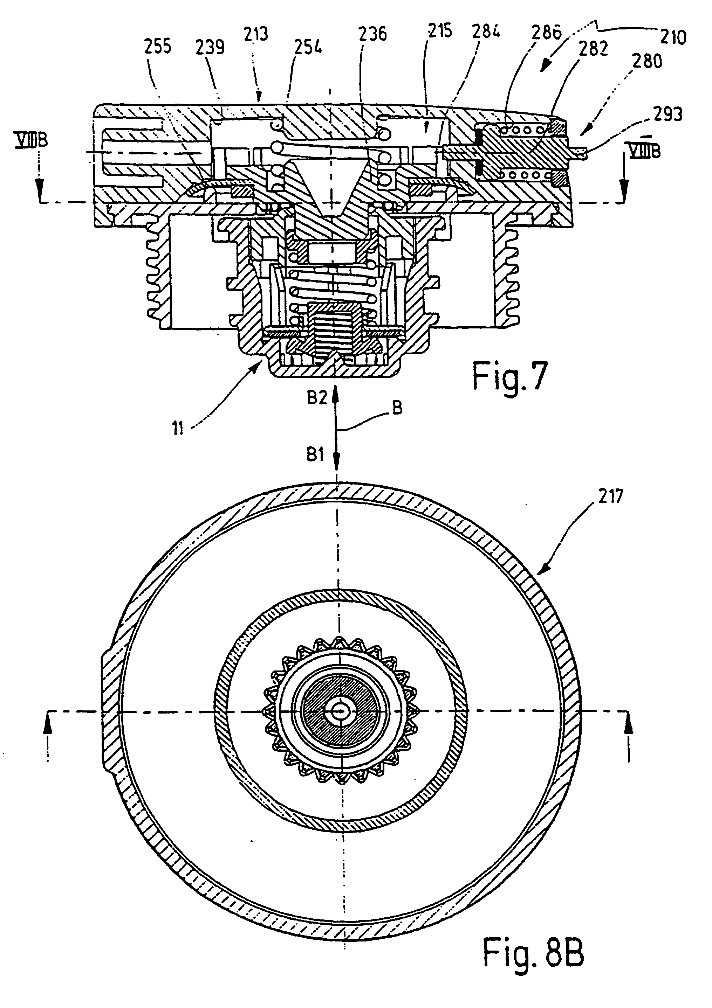

Die Figuren 6 bis 8 zeigen einen Verschlußdeckel 210, dessen Funktion im wesentlichen dem Verschlußdeckel 110 nach den Figuren 3 bis 5 entspricht. Der wesentliche Unterschied besteht in der Ausgestaltung der ratschenartigen Drehverbindungsvorrichtung 280, die hier an einem Umfangsbereich radial angreift. Hierzu ist der Kopplungsbolzen 282 in einer radialen nach außen verschlossenen Bohrung 286 der Handhabe 213 federbelastet derart angeordnet, daß er in Richtung nach innen vorgespannt ist, so daß sein mit einer Schrägfläche 289 versehenes Ende 290 stets in eine Bohrung 284 eines mit mehreren derartiger Bohrungen 284 versehenen, vom Innenteil 214 abstehenden und mit diesem drehfest verbundenen Kranzes bzw. Ringes 283 (Figur 8B) eingreift. Das äußere Ende des Kopplungsbolzens 282 ist mit einer Griffleiste 293 versehen, mittels der der Kopplungsbolzen 282 um jeweils 180° in die entsprechende Kupplungsstellung, das heißt für das Abschrauben oder Aufschrauben verdrehbar ist.

Die in den Figuren 1 und 2, 3 bis 5 und 6 bis 8 dargestellte ratschenartige Drehverbindungsvorrichtung 80, 180 bzw. 280 kann auch mit einer druck- oder temperaturabhängig gesteuerten Verdrehsicherung kombiniert sein, die eine drehfeste Verbindung zwischen Handhabe 13, 113 oder 213 und dem Außengewindeteil 17, 117 oder 217 nur dann vorsieht, wenn die Temperatur im Kühlmittelbehälter so niedrig ist, dass keine Verbrühungs- oder sonstige Gefahr beim Abschrauben des Verschlußdeckels besteht.

Bspw. ist die ratschenartige Drehverbindungsvorrichtung 80, 180 und/oder 280 temperaturabhängig derart gesteuert, dass der Kopplungsbolzen 82, 182 bzw. 282 an einem Ende von einer temperaturabhängigen Memoryfeder und am anderen Ende mit einer Rückstellfeder beaufschlagt ist, was bewirkt, dass bei vorbestimmter zu hoher Temperatur im Kühlmittelbehälter der Kopplungsbolzen aus der betreffenden Rastbohrung 84, 184 bzw. 284 ausgedrückt wird bzw. freikommt.

Eine andere Variante einer temperaturabhängig gesteuerten Verdrehsicherung besteht darin, dass der Bohrungskranz 83, 183 bzw. 283 in der zum Kopplungsbolzen beschriebenen Art und Weise gegenüber diesem ein- bzw. ausrückbar angeordnet gesteuert ist.

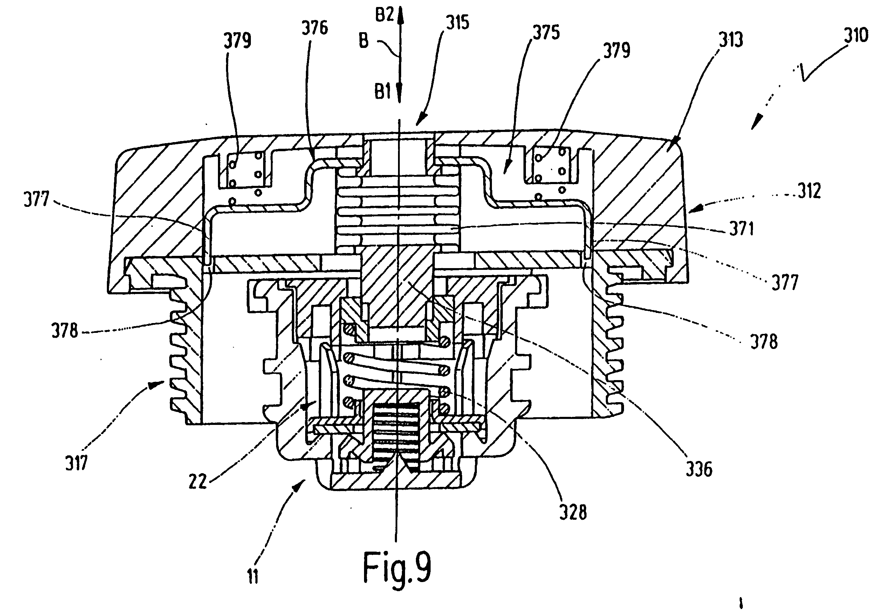

Eine bevorzugte Ausführungsform eines Verschlußdeckels 310 zeigt Figur 9, bei dem der Antrieb 315 in Flucht, das heißt in axial konzentrische Ausrichtung zur Druckfeder 328 angeordnet und in der Stirnseite der Handhabe 313 des Verschlußdeckels 310 axial geführt ist. Der sich in axialer Richtung ausdehnende Antrieb 315 ist elektrisch angesteuert. Hierzu sind elektrische Kontakte 357 nach außen geführt.

Der elektrisch angesteuerte Antrieb 315 ist gemäß einer Variante mit einem PTC-Heizelement als Wärmequelle vorgesehen.

Der Antrieb 315 ist durch einen Metallhydrid-Aktuator gebildet. Auch bei diesem Antrieb wird beispielsweise ein PTC-Heizelement verwendet, mit dessen Hilfe das Metallhydrid im Aktuator elektrisch auf eine definierte Temperatur aufgeheizt wird. Entsprechend der Temperatur stellt sich ein Druck im Aktuator ein, so daß sich der Antrieb 315 ausdehnt und auf das Druckstück 336 zum Vorspannen der Druckfeder 328 wirkt. Wird die elektrische Beheizung eingestellt, kühlt sich das Metallhydrid im Aktuator durch Wärmeaustausch mit seiner Umgebung ab, so daß der Druck im Aktuator sinkt, was eine Rückstellbewegung und damit Entspannung der Druckfeder 328 zur Folge hat. Die Auswirkungen auf die Überdruckanordnung 11 ergeben sich in vorbeschriebener Weise.

Das eigentliche Antriebselement ist von einem Balg 371 umgeben.

Bei dem in Figur 9 dargestellten bevorzugten Ausführungsbeispiel ist in Verbindung mit dem elektrisch angesteuerten Antrieb 315 eine temperaturabhängig gesteuerte Verdrehsicherung 375 verwendet. Die Verdrehsicherung 375 ist durch einen Bügel 376 gebildet, der mittig auf dem Antriebselement 315 beziehungsweise dessen Balg 371 aufliegt und im Ausgangszustand in einem geringen Abstand von der Innenwandung der Handhabe 313 liegt. Der sich radial innerhalb der Kammer 339 erstreckende Bügel 376 besitzt an beiden Enden zwei axial nach unten umgebogene Finger 377, die in axiale Bohrungen 378 des Außengewindeteils 117 eindringen. Dieser Ausgangszustand ist in Figur 9 dargestellt. Der Bügel 376 ist zwischen seiner den Balg 371 übergreifenden Mitte und den endseitigen Fingern 377 jeweils von einer Druckfeder 379 belastet. In dem dargestellten Zustand ist eine Drehverbindung zwischen Handhabe 313 und Außengewindeteil 317 gegeben, so daß der Verschlußdeckel 310 abgeschraubt bzw. aufgeschraubt werden kann.

Während des Motorbetriebs wird sich der Antrieb 315 axial etwas ausdehnen, was bewirkt, daß aufgrund der noch zu großen Kraft der Druckfeder 328 der Antrieb 315 sich in Richtung des Pfeiles B2 nach oben bewegt und den Sperrbügel 376 soweit anhebt, bis dieser sich gegen die Innenwandung der Handhabe 313 legt. In diesem Zustand ist der Sperrbügel 376 aus den Bohrungen 378 ausgehoben, so daß die drehfeste Verbindung zwischen Handhabe 313 und Außengewindeteil 317 aufgehoben ist. Wird der Motor abgestellt, erhöht sich aufgrund der gewählten elektrischen Kopplung die Temperatur im Antriebselement 315 weiter, was bewirkt, daß es sich weiter in axialer Richtung ausdehnt. Dies hat aufgrund der Anlage an der Innenwandung der Handhabe 313 zur Folge, daß sich der Antrieb 315 in Richtung gemäß Pfeil B2 nach unten dehnt und das Druckstück 336 entgegen der Wirkung der Druckfeder 328 beaufschlagt und damit die letztere auf einen Öffnungsdruck von circa 2,0 bar vorspannt. Auch in diesem Zustand bleibt die Leerlaufverbindung zwischen Handhabe 313 und Außengewindeteil 317 erhalten, da der Sperrbügel 376 weiterhin in seiner obersten Position verbleibt. Erst nach vollständigem Abkühlen wird die Ausgangslage gemäß Figur 9 wieder erreicht.

Gemäß einem weiteren nicht dargestellten Ausführungsbeispiel vorliegender Erfindung ist ein zu Figur 9 gezeigter Sperrbügel bei den Figuren 3 bis 5 und 6 bis 8 vorgesehen. Dabei ist der Sperrbügel beispielsweise mit dem Druckstück 136 bzw. 236 bewegungsmäßig gekoppelt.

Es versteht sich, daß ein derartiger Verschlußdeckel auch bei Ausgleichsbehältern von Kühl- oder Heizsystemen o.dgl. Verwendung finden kann.

## Patentansprüche

1. Verschlußdeckel (310) für einen ortsfesten Stutzen eines Behälters, insbesondere Kraftfahrzeugkühlers, mit einem Deckelinnenteil (14), das eine Strömungsverbindung zwischen dem Behälterinneren und dem Behälteräußeren und eine Ventilanordnung (11) zum Freigeben und Sperren der Strömungsverbindung aufweist, wobei ein hin und her bewegbarer Ventilkörper (22) der Ventilanordnung (11) zum Behälterinneren hin gegen einen Dichtsitz (21) am Deckelinnenteil (14) unter Vorspannung derart gedrückt ist, daß er bei Überschreiten eines Grenzwertes des Behälterinnendrucks vom Dichtsitz (21) abhebbar ist, wobei die Vorspannung, mit der der Ventilkörper (22) gegen den Dichtsitz (21) gedrückt ist, mittels eines elektrothermisch gesteuerten Antriebs (315) einstellbar ist, **dadurch gekennzeichnet, daß** der Antrieb (315) durch einen elektrisch beheizbaren Metallhydrid-Aktuator gebildet ist.

2. Verschlußdeckel nach Anspruch 1, **dadurch gekennzeichnet, daß** der Antrieb (315) mit einem PTC-Heizelement versehen ist.

3. Verschlußdeckel nach Anspruch 1 oder 2, **dadurch gekennzeichnet, daß** der Antrieb (315) einen Balg (371) aufweist, innerhalb des durch Wärme dehnbaren Elementes angeordnet ist.

4. Verschlußdeckel nach mindestens einem der Ansprüche 1 bis 3, **dadurch gekennzeichnet, daß** zwischen einer Handhabe (313) und einem Außengewindeteil (317) eine temperaturabhängige Verdrehsicherung (375) angeordnet ist.

5. Verschlußdeckel nach Anspruch 4 und Anspruch 2 und/oder 3, **dadurch gekennzeichnet, daß** die Verdrehsicherung (375) einen Bügel (376) aufweist, der mit dem Antrieb (315) bewegungsschlüssig verbunden ist und Endfinger (377) aufweist, die in Ausnehmungen des Außengewindeteils (317) eindringen.

6. Verschlußdeckel nach Anspruch 5, **dadurch gekennzeichnet, daß** der Bügel (376) mit dem Balg (371) des Antriebs (315) bewegungsgekoppelt ist.

7. Verschlußdeckel nach Anspruch 5 oder 6, **dadurch gekennzeichnet, daß** der Bügel (376) federbeaufschlagt ist.

8. Verschlußdeckel nach mindestens einem der vorhergehenden Ansprüche, **dadurch gekennzeichnet, daß** der Ventilkörper (22) dem Antrieb (315) abgewandt durch eine Feder (328) vorgespannt ist, die sich an ihrem dem Ventilkörper (22) abgewandten Ende an einem Druckstück (336) abstützt, das mittels des gesteuerten Antriebs (315) axial bewegbar ist.

## Claims

1. Closure cap (310) for the fixed nozzle of a container, especially a motor-vehicle radiator, comprising an inner part (14) of the cap, which includes a flow path between the inside and outside of the container, and a valve arrangement (11) for opening and closing the flow path, wherein a valve body (22) of the valve arrangement (11) is movable to and fro and is urged by a bias towards the inside of the container against a seal seat (21) on the inner part (14) of the cap, such that, when a limit value of the internal pressure of the container is exceeded, it can be lifted from the seal seat (21), wherein the bias, by which the valve body (22) is urged against the seal seat (21), can be adjusted by means of an electrothermally controlled actuating means (315), **characterized in that** the actuating means (315) is constituted by an electrically heatable metal hydride actuator.

2. Closure cap according to Claim 1, **characterized in that** the actuating means (315) is provided with a PTC heating element.

3. Closure cap according to Claim 1 or Claim 2, **characterized in that** the actuating means (315) comprises bellows (371) disposed inside the element, the element being extensible through heat.

4. Closure cap according to at least one of Claims 1 to 3, **characterized in that** a temperature-dependent anti-twist device (375) is disposed between a hand-operated member (313) and an outer thread portion (317).

5. Closure cap according to Claim 4 and Claim 2 and/or Claim 3, **characterized in that** the anti-twist device (375) comprises a "U"-type piece (376), which is connected to the actuating means (315) so as to be locked in movement therewith, and has end-fingers (377), the end-fingers penetrating recesses in the outer thread portion (317).

6. Closure cap according to Claim 5, **characterized in that** the "U"-type piece (376) is movably connected to the bellows (371) ofthe actuating means (315).

7. Closure cap according to Claim 5 or Claim 6, **characterized in that** the "U"-type piece (3 76) is spring-loaded.

8. Closure cap according to at least one of the preceding claims, **characterized in that** the valve body (22) is biased away from the actuating means (315) by a spring (328) which, at its end facing away from the valve body (22), bears against a pressure piece (336), the pressure piece (336) being axially movable by means of the controlled actuating means (315).

## Revendications

1. Bouchon de fermeture (310) pour un manchon fixe d'un récipient, plus particulièrement d'un radiateur de véhicule, avec une partie interne de bouchon (14) qui présente une liaison d'écoulement entre l'intérieure du récipient et l'extérieur du récipient, et un dispositif à soupape (11) pour libérer et bloquer la liaison d'écoulement, moyennant quoi un corps de soupape (22) du dispositif à soupape (11), se déplaçant avec un mouvement de va et vient, est comprimé vers l'intérieur du récipient contre un siège d'étanchéité (21) sur la partie interne du bouchon (14), avec une pré-contrainte, de telle sorte qu'il puisse être soulevé du siège d'étanchéité (21) lors d'un dépassement d'une valeur limite de la pression interne du récipient, et ajustable à l'aide d'un entraînement commandé de manière électrothermique (315), **caractérisé en ce que** l'entraînement (315) est constitué d'un vérin à hydrure métallique.

2. Bouchon de fermeture selon la revendication 1, **caractérisé en ce que** l'entraînement (315) est muni d'un élément chauffant PTC.

3. Bouchon de fermeture selon la revendication 1 ou 2, **caractérisé en ce que** l'entraînement (315) comprend un soufflet (371) dans lequel se trouve l'élément à dilatation thermique.

4. Bouchon de fermeture selon l'une des revendications 1 à 3, **caractérisé en ce que**, entre une manette (313) et une partie à filetage externe (317), se trouve un blocage de rotation (375) dépendant de la température.

5. Bouchon de fermeture selon la revendication 4 et la revendication 5 et/ou 3, **caractérisé en ce que** le blocage de rotation (375) comporte un étrier (376) relié de manière mobile à l'entraînement (315) et des doigts d'extrémité (377) qui s'emboîtent dans des creux de la partie à filetage externe (317).

6. Bouchon de fermeture selon la revendication 5, **caractérisé en ce que** l'étrier (376) est couplé de manière mobile avec le soufflet (371) de l'entraînement (315).

7. Bouchon de fermeture selon la revendication 5 ou 6, **caractérisé en ce que** l'étrier (376) est muni d'un ressort.

8. Bouchon de fermeture selon au moins l'une des revendications précédentes, **caractérisé en ce que** le corps de soupape (22) est pré-contraint du côté opposé à l'entraînement (315) par un ressort (328) qui s'appuie, sur son extrémité opposée au corps de soupape (22), contre un élément de pression (336) qui est mobile axialement à l'aide de l'entraînement contrôlé (315).
